# EUROPÄISCHE PATENTSCHRIFT

(11) **EP 3 509 923 B1**
(45) Veröffentlichungstag und Bekanntmachung des Hinweises auf die Patenterteilung: **10.11.2021**
(21) Anmeldenummer: 17764584.3
(22) Anmeldetag: 08.09.2017
(51) Int. Cl.: B60T 17/22, B60T 13/66

(54) **MEHRTEILIG AUSGEFÜHRTE BREMSREGELUNG**
MULTI-PART CLOSED-LOOP BRAKE CONTROLLER
RÉGULATION DE FREIN RÉALISÉE EN PLUSIEURS PARTIES

(30) Priorität: 09.09.2016 DE 102016217275
(43) Veröffentlichungstag der Anmeldung: 17.07.2019
(73) Patentinhaber: KNORR-BREMSE Systeme für Schienenfahrzeuge GmbH, 80809 München (DE)
(72) Erfinder: HERDEN, Marc-Oliver, 81377 München (DE); RIEDIGER, Oliver, 81547 München (DE); FISCHER, Marcus, 80469 München (DE)
(86) Internationale Anmeldenummer: PCT/EP2017/072645
(87) Internationale Veröffentlichungsnummer: WO 2018/046691

(56) Entgegenhaltungen:
- DE-A1- 10 332 034
- DE-A1- 19 848 992
- DE-A1- 19 848 994

## Beschreibung

In modernen Bremssystem-Konzepten für Schienenfahrzeuge (z.B. elektrische, hydraulische oder pneumatische) werden Systeme zum Regeln der Bremskraft (bzw. des Bremsdrucks) eingesetzt. In früheren Konzepten wurde die wirksame Bremskraft nicht geregelt, sondern lediglich gesteuert (z.B. Regelung eines Vorsteuerdruckes am Beginn der pneumatischen Kette). Um die wirksame Bremskraft aber zu regeln, anstatt diese nur zu steuern, wird eine Vielzahl von Sensorinformationen von einer Vielzahl von Sensoren benötigt. Moderne Bremssystem-Konzepte für Schienenfahrzeuge bieten zudem erweiterte Diagnosemöglichkeiten für das Bremssystem, sowie für weitere Eigenschaften des gesamten Schienenfahrzeugs (z.B. Entgleisungsdetektion). Auch hierdurch steigt die Anzahl der im Fahrzeug benötigten Sensoren. Dies erhöht auch die Anzahl der benötigten Kabel.

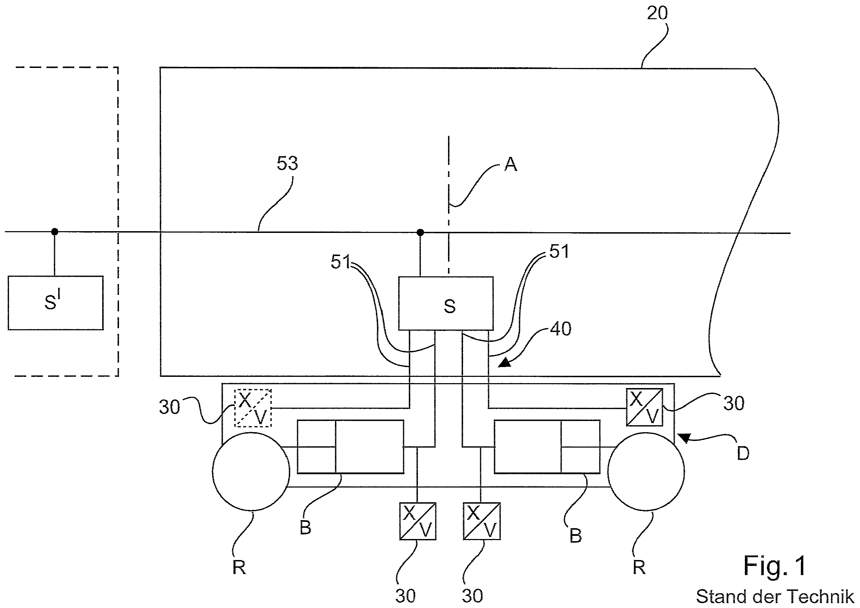

Im Stand der Technik ist es bekannt, die Hardware der Bremsregelung im Wagenkasten bzw. im Unterflur-Bereich eines Waggons unterzubringen. Fig. 1 zeigt einen solchen Aufbau. Eine Bremsregelung S greift im Betrieb auf Sensoren 30 zu, welche an Drehgestellen D der einzelnen Waggons (Wagenkasten 20) eines Schienenfahrzeugs angeordnet sind. Daraus ergibt sich ein langer Übertragungsweg zwischen den Sensoren 30 und der Bremsregelung S. Eine hierfür (zwischen den Sensoren 30 und der Bremsregelung S) verwendete Verkabelung 51 muss zudem einen beweglichen Übergang 40 zwischen Drehgestell D und Wagenkasten 20 überbrücken, wodurch das Ausführen der Verkabelung 51 sowie die Zunahme der Kabelanzahl einen hohen technischen Aufwand erfordert und kostengünstig nicht zu realisieren ist.

Aus der DE 198 48 994 A1 ist es bekannt, dezentrale Steuereinheiten in Drehgestellen anzuordnen, die über eine zentrale Bremssteuereinheit oder eine Notbremssicherheitsleitung angesteuert werden können. Die zentrale Steuereinheit ist jeweils nur einmal pro Fahrzeug oder Zugverband vorzusehen. Dies wird in vergleichbarer Weise auch in der DE 198 48 992 A1 vorgeschlagen.

Die DE 103 32 034 A1 betrifft eine Einrichtung zum Bremsen eines Schienenfahrzeugs, wobei über ein Wagen-Elektronikbaugruppe Wagen mit unterschiedlichen Bremssystemen eingesetzt werden können.

Es ist eine Aufgabe der Erfindung, die oben geschilderte Situation zu verbessern, d.h. die Kabelführung zu vereinfachen und die Kabelanzahl zu reduzieren. Diese Aufgabe wird gelöst durch eine Ausgestaltung gemäß der unabhängigen Ansprüche. Vorteilhafte Weiterbildungen sind Gegenstand der Unteransprüche.

Erfindungsgemäß wird eine Bremssteuerung/-regelung für ein Schienenfahrzeug zweiteilig ausgeführt vorgesehen, aufgeteilt in eine interne Bremssteuerung/-regelung und in eine externe Bremssteuerung/-regelung. Die externe Bremssteuerung/-regelung istin oder an dem Drehgestell anordenbar. Die interne Bremssteuerung/- regelung ist innerhalb des Wagenkastens oder an dem Wagenkasten anordenbar.

Folglich muss keine Verkabelung zwischen extern liegenden Sensoren und der internen Bremssteuerung/-regelung vorgesehen werden, die einen beweglichen Übergang, wie beispielsweise zwischen einem Wagenkasten und einem daran drehbar befestigten Drehgestell, überbrückt. Es muss lediglich eine Verkabelung zwischen interner und externer Bremssteuerung/-regelung vorgesehen werden, wobei diese Verkabelung auf Grund des erfindungsgemäßen (Vor-)Verarbeitens der Daten durch die externe Bremssteuerung/-regelung mit einer geringeren Anzahl an Kabeln ausgeführt werden kann. Erfindungsgemäß ist die externe Bremssteuerung/-regelung dazu eingerichtet, von den Sensoren bezogene Daten zu sammeln und/oder (vor-)zu verarbeiten, um diese an beispielsweise die interne Bremssteuerung/-regelung weiterzuleiten, die außerhalb des Drehgestells (beispielsweise im Wagenkasten) angeordnet ist. Falls die Verbindung zwischen der erfindungsgemäßen externen und internen Bremssteuerung/- regelung über Kabel realisiert wird, kann die (zwischen interner und externer Bremssteuerung/-regelung) auszutauschende Datenmenge auf Grund der Verarbeitung der Daten durch die externe Bremssteuerung/-regelung reduziert oder in andere Signalarten (z.B. Bus-Signale) umgewandelt werden, wodurch die Anzahl der Kabel zum Überbrücken des beweglichen Übergangs zwischen Drehgestell und Wagenkasten verringert werden kann.

Des Weiteren wird außerdem auch die zwischen den einzelnen Waggons zu übertragende Datenmenge, bzw. die zwischen den einzelnen internen Bremssteuerungen/-regelungen der einzelnen Waggons zu übertragende Datenmenge reduziert. Denn einige Sensordaten werden lediglich zwischen der internen und der externen Bremssteuerung/-regelung eines Wagens ausgetauscht.

Gemäß einer vorteilhaften Weiterbildung wird die Verbindung zwischen der internen und der externen Bremssteuerung/-regelung nicht mittels Kabel, sondern vorteilhafterweise über Funk realisiert, wobei die (zwischen interner und externer Bremssteuerung/-regelung) auszutauschende Datenmenge auf Grund der Verarbeitung der Daten durch die externe Bremssteuerung/-regelung ebenfalls reduziert werden kann, wodurch die benötigte Übertragungszeit gesenkt wird, und weniger Bandbreite der Funkverbindung benötigt wird. Des Weiteren fällt der technische Aufwand zum Überbrücken des beweglichen Übergangs mittels Kabel weg.

Gemäß einer weiteren vorteilhaften Weiterbildung führen die interne und die externe Bremssteuerung/-regelung zum Erhöhen der Fehlersicherheit beim Betrieb eines Schienenfahrzeugs ausgewählte Datenverarbeitungsschritte parallel zueinander aus, um Fehler bei der Datenverarbeitung der internen oder der externen Bremssteuerung/- regelung zu erkennen und anzuzeigen.
Fig. 1 zeigt schematisch den Aufbau eines herkömmlichen Waggons.
Fig. 2 zeigt schematisch den Aufbau eines erfindungsgemäßen Waggons.

Fig. 1 wurde bereits in der Beschreibungseinleitung erwähnt und zeigt den Aufbau eines Waggons eines Schienenfahrzeugs gemäß des Standes der Technik. Hierzu wird angemerkt, dass der Erfindungsgedanken zwar anhand der Figuren am Beispiel eines Waggons erklärt wird. Analog zu einem Waggon ist der Erfindungsgedanke allerdings auch auf Loks, Triebzüge usw. anwendbar.

In Fig. 1 wird ein Ausschnitt eines Schienenfahrzeugs in einer Seitenansicht gezeigt. Der Waggon des Schienenfahrzeugs weist u.a. einen Wagenkasten 20 und zwei Drehgestelle D auf, wobei in der Fig. 1 nur eines dieser Drehgestelle D dargestellt ist.

Hierbei sei angemerkt, dass die Erfindung außerdem auf alle Drehgestell- sowie Fahrzeugbauarten anwendbar ist und die Waggons somit auch eine andere Anzahl an Drehgestellen aufweisen können. Beispielsweise ist die Erfindung auch auf Waggons mit Jakobsdrehgestell anwendbar.

Innerhalb des Wagenkastens 20 ist eine Bremsregelung S angeordnet. Das Drehgestell D ist unterhalb des Wagenkastens 20 angeordnet und weist Räder/Radsätze R auf.

Zum Abbremsen der Räder R sind Bremszylinder B vorgesehen. Hierzu wird angemerkt, dass die Erfindung nicht lediglich auf Schienenfahrzeuge mit pneumatischen Bremssystemen anwendbar ist, obwohl der in den Figuren gezeigte Waggon ein pneumatisches Bremssystem aufweist. Aus diesem Grund sind in keiner der Figuren pneumatische Leitungen dargestellt, da diese für den Erfindungsgedanken nicht relevant sind. Des Weiteren sind innerhalb des Drehgestells D mehrere Sensoren 30 angeordnet, welche beispielsweise die aktuelle Umfangsgeschwindigkeit der Räder R, Regelgrößen wie die aktuelle Bremskraft, oder auch Diagnosedaten, wie z.B. die Luftfeuchte, oder eine Temperatur erfassen. Die Sensoren 30 weisen in den Figuren zwar eine Beschriftung mit "X" bzw. "V" auf, diese Beschriftung stellt allerdings keine Einschränkung auf deren Bauart oder auf den Sensortyp oder auf die durch die Sensoren 30 messbaren Werte dar. Die Bremsregelung S benötigt für ihren Betrieb die von den Sensoren 30 erfassten Daten. Zum Übertragen der Daten zwischen den Sensoren 30 und der Bremsregelung S ist eine Verkabelung 51 vorgesehen. In der gezeigten Ausführung müssen vier Kabel (bzw. Leitungen) der Verkabelung 51 den Übergang 40 zwischen Drehgestell D und Wagenkasten 20 überwinden. Dies ist nur unter einem hohen technischen Aufwand möglich, da trotz der Verkabelung 51 eine Drehmöglichkeit des Drehgestells D um die Achse A bezüglich des Wagenkastens 20 gegeben sein muss.

Des Weiteren ist eine zugweite Datenverbindung, ein zugweiter BUS 53, zum waggonübergreifenden Verbinden der Bremssteuerungen/-regelungen S, S' vorgesehen.

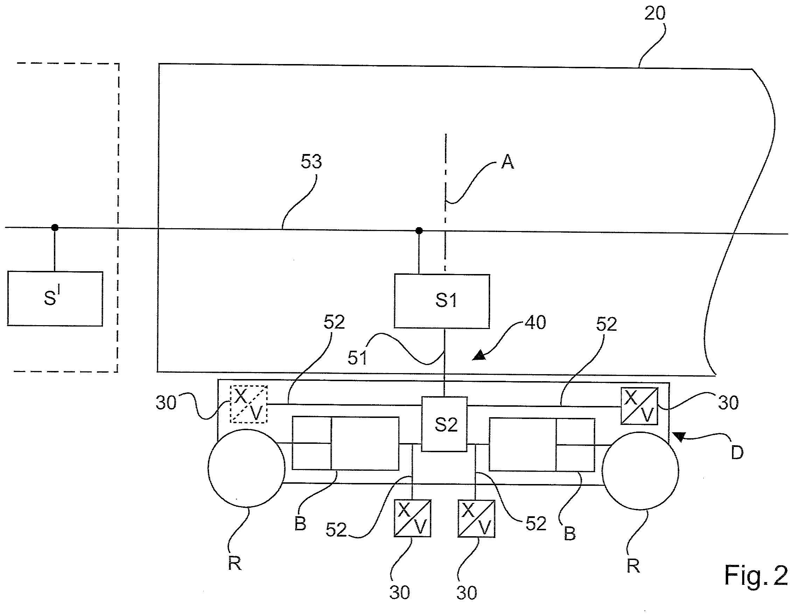

**Fig.** 2 zeigt eine Ausführungsform der Erfindung. Wie der Waggon in Fig. 1 weist auch die Ausführungsform aus Fig. 2 einen Wagenkasten 20 auf, sowie ein Drehgestell D, das an dem Wagenkasten 20 befestigt ist und bezüglich des Wagenkastens 20 um eine Achse A drehbar ist, wobei angemerkt werden soll, dass auch andere Bewegungen denkbar sind. Die Ausführungsform aus Fig. 2 weist des Weiteren am Drehgestell D ebenfalls Räder/Radsätze R, Bremszylinder B, und Sensoren 30 auf, wie auch der Waggon in Fig. 1. Des Weiteren ist ebenfalls eine Bremsregelung S1 im Wagenkasten 20 angeordnet.

Die Ausführungsform aus Fig. 2 unterscheidet sich dadurch von dem Waggon aus Fig. 1, dass die Bremsregelung S aus Fig. 1 zweiteilig ausgeführt ist, aufgeteilt in einen im Wagenkasten 20 angeordneten Teil S1 (nachfolgend als interne Bremsregelung S1 bezeichnet) sowie einen im Drehgestell D angeordneten Teil S2 (nachfolgend als externe Bremsregelung S2 bezeichnet). Die innerhalb des Drehgestells D vorgesehene externe Bremsregelung S2 ist zum Sammeln und/oder (Vor-)verarbeiten von Daten ausgebildet. Mit der externen Bremsregelung S2 ist eine Gruppe von Sensoren 30 über eine Verkabelung 52 verbunden. Diese externe Bremsregelung S2 weist eine elektronische Datenverarbeitungsanlage auf und ist mit der internen Bremsregelung S1 verbunden, mittels einer Verkabelung 51. Die Verkabelung 51 weist in der dargestellten Ausführungsform nur ein einziges Datenkabel auf, im Vergleich zu vier Kabeln, wie der Waggon aus Fig. 1. In der Ausführungsform aus Fig. 2 muss demnach nur ein einziges Datenkabel der Verkabelung 51 einen Übergang 40 zwischen Drehgestell D und Wagenkasten 20 überwinden. Die Reduktion der benötigten Kabel ist dadurch möglich, dass die von den Sensoren 30 gelieferten Daten in der externen Bremsregelung S2 gebündelt, verarbeitet bzw. vorverarbeitet werden, bevor diese zur internen Bremsregelung S1 weitergeleitet oder von dieser abgerufen werden. In der in Fig. 2 gezeigten Ausführungsform übernimmt die externe Bremsregelung S2 folglich einen Teil der Aufgaben, die bei dem Waggon aus Fig. 1 durch die Bremsregelung S bewältigt wurden.

Eine weitere, nicht dargestellte Ausführungsform unterscheidet sich dadurch von der Ausführungsform aus Fig. 2, dass die externe Bremsregelung S2 nicht innerhalb des Wagenkastens 20 angeordnet ist, sondern am Wagenkasten 20.

Eine weitere, nicht dargestellte Ausführungsform unterscheidet sich dadurch von der Ausführungsform aus Fig. 2 oder von der weiteren Ausführungsform, dass die externe Bremsregelung S2 ein Gehäuse aufweist oder innerhalb eines Gehäuses untergebracht ist. Dieses Gehäuse ist IPx-geschützt, also beispielsweise wasserdicht. Darüber hinaus ist das Gehäuse vor weiteren äußeren Einflüssen geschützt, wie sie bei dem Betrieb eines Schienenfahrzeugs auftreten können. Hierunter zählt ein Schutz vor Erschütterungen durch Dämpfung, sowie eine elektromagnetische Abschirmung (EMV).

Eine Alternative zur Dämpfung besteht darin, die Bremsregelung S2 so auszuführen, dass diese gegenüber Erschütterungen resistent ist.

Eine weitere, nicht dargestellte Ausführungsform unterscheidet sich dadurch von der Ausführungsform aus Fig. 2 oder von den weiteren Ausführungsformen, dass die Verkabelung 51 als Daten-BUS (lokaler BUS) ausgestaltet ist.

Eine weitere, nicht dargestellte Ausführungsform unterscheidet sich dadurch von der Ausführungsform aus Fig. 2 oder von den weiteren Ausführungsformen, dass die Verkabelung 51 zwischen externer Bremsregelung S2 und interner Bremsregelung S1 durch eine Funkverbindung ersetzt wird.

Eine weitere, nicht dargestellte Ausführungsform unterscheidet sich dadurch von der Ausführungsform aus Fig. 2 oder von den weiteren Ausführungsformen, dass die Verkabelung 52 zwischen den Sensoren 30 und der externen Bremsregelung S2 als Sensor-BUS ausgestaltet ist.

In den obigen Ausführungsformen wird die externe Bremsregelung S2 von der internen Bremsregelung S1 mit Strom versorgt (Verkabelung der Energieversorgung nicht dargestellt).

In einer weiteren, nicht dargestellten Ausführungsform wird die Stromversorgung der externen Bremsregelung S2 durch eine in dem Drehgestell D untergebrachte Batterie (oder einen Akkumulator) oder durch "energy harvesting" realisiert. Folglich ist innerhalb der Verkabelung 51 kein Stromkabel notwendig, das den beweglichen Übergang 40 zwischen Drehgestell D und Wagenkasten 20 überwinden muss.

In einer weiteren, nicht dargestellten Ausführungsform, die sonst mit der Ausführungsform aus Fig. 2 identisch ist, wird die Stromversorgung der externen Bremsregelung S2 durch eine nicht in dem Drehgestell D untergebrachte Energieversorgung realisiert. In einer weiteren, nicht dargestellten Ausführungsform, die sonst mit der Ausführungsform aus Fig. 2 identisch ist, wird die interne Bremsregelung S1 von der externen Bremsregelung S2 mit Strom versorgt.

Zum Klarstellen des Erfindungsgedankens sei folgendes erwähnt: Die Verkabelung 51 in Fig. 1 weist vier Leitungen auf, und die Verkabelung 51 in Fig. 2 weist nur eine Leitung auf. Die genaue Anzahl dieser Leitungen der Verkabelung 51 wird in der Figurenbeschreibung zwar explizit erwähnt, allerdings zielt der Erfindungsgedanke lediglich darauf ab, dass die Anzahl der Leitungen bzw. Kabel der Verkabelung 51 durch das Vorsehen einer mehrteiligen Bremsregelung reduziert werden kann. Dies bedeutet im übertragenen Sinne, dass die Anzahl der Leitungen bzw. Kabel der Verkabelung 51 aus den Ausführungsformen der Erfindung geringer sein soll, als die Anzahl der Leitungen bzw. Kabel der Verkabelung 51 gemäß des Standes der Technik. Beispielsweise soll demnach die Anzahl der Leitungen bzw. Kabel der Verkabelung 51 aus Fig. 2 (sowie aller weiteren Ausführungsformen) geringer sein als die Anzahl der Leitungen bzw. Kabel der Verkabelung 51 aus Fig. 1 (Stand der Technik). Eine explizite Festlegung der Anzahl der Leitungen bzw. Kabel wird allerdings nicht vorgenommen.

Erfindungsgemäß kommuniziert die im oder am Drehgestell D vorgesehene externe Bremsregelung S2 mit einem Gerät, das nicht im oder am Drehgestell D vorgesehen ist. Dieses Gerät kann die exemplarisch erwähnte interne Bremsregelung S1 sein, aber auch ein Diagnosegerät, oder auch die interne Bremsregelung S1 und ein Diagnosegerät.

Des Weiteren muss der zugweite BUS 53 nicht zwingend die internen Bremsregelungen S1, S' aller Waggons 20 miteinander verbinden, es können durch diesen auch lediglich BUS-Abschnitte verbunden werden, die nur einen Teilbereich eines Zugs einschließen.

Generell wird angemerkt, dass erfindungsgemäß nicht zwingend für jede externe Bremsregelung S2 auch genau eine internen Bremsregelung S1 vorgesehen sein muss, und umgekehrt. Erfindungsgemäß werden Daten durch eine oder mehrere externe Bremsregelungen S2 außerhalb des Wagenkastens (vor-)verarbeitet, und an eine oder mehrere interne Bremsregelungen S1, S' und/oder an eine oder mehrere Diagnoseeinheiten weitergeleitet.

### BEZUGSZEICHENLISTE

- D: Drehgestell
- B: Bremszylinder (Einzahl/Mehrzahl); Bremskraftsteller
- R: Rad/Radsatz
- S, S': Bremssteuerung/-regelung (Stand der Technik)
- S1, S': interne Bremssteuerung/-regelung
- S2: externe Bremssteuerung/-regelung
- A: Drehachse (zwischen Drehgestell D und Wagenkasten 20), beispielhaft für Relativbewegungen

- 20: Wagenkasten
- 30: Sensor(en)
- 40: Übergang (zwischen Drehgestell D und Wagenkasten 20)

- 51: Verkabelung zwischen Bremssteuerung/-regelung S und Sensoren 30 (bzw. zwischen interner Bremssteuerung/-regelung S1 oder Diagnosegerät und externer Bremssteuerung/-regelung S2); lokaler Daten-BUS
- 52: Verkabelung zwischen Sensoren 30 und externer Bremssteuerung/-regelung S2
- 53: zugweiter BUS zwischen Bremssteuerungen/-regelungen S, S' (gemäß des Standes der Technik) bzw. zwischen erfindungsgemäßen internen Bremssteuerungen/-regelungen S1, S'

## Patentansprüche

1. Bremssteuerung/-regelung (S1, S2) für ein Schienenfahrzeug, das einen Wagenkasten (20) aufweist, an dem mindestens ein Drehgestell (D) um mindestens einen Freiheitsgrad beweglich befestigt ist,
**dadurch gekennzeichnet, dass**
die Bremssteuerung/-regelung (S1, S2) mehrteilig ausgeführt ist, aufgeteilt in wenigstens eine interne Bremssteuerung/-regelung (S1), die innerhalb oder an dem Wagenkasten (20) anordenbar ist, sowie in wenigstens eine externe Bremssteuerung/- regelung (S2), die innerhalb oder an dem Drehgestell (D) anordenbar ist, wobei
die externe Bremssteuerung/-regelung (S2) dazu eingerichtet ist, mit Sensoren (30) zu kommunizieren, die an dem Drehgestell (D) angeordnet sind, und von den Sensoren (30) ermittelte Daten zu sammeln und/oder (vor-)zuverarbeiten, um diese an die interne Bremssteuerung/-regelung (S1) weiterzuleiten, so dass die auszutauschende Datenmenge aufgrund der Verarbeitung der Daten durch die externe Bremssteuerung/- regelung (S2) reduziert wird.

2. Bremssteuerung/-regelung (S1, S2) gemäß dem vorhergehenden Anspruch, wobei die externe Bremssteuerung/-regelung (S2) dazu eingerichtet ist, mit der internen Bremssteuerung/-regelung (S1), über eine Verkabelung (51) zu kommunizieren.

3. Bremssteuerung/-regelung (S1, S2) gemäß Anspruch 1, wobei die externe Bremssteuerung/-regelung (S2) dazu eingerichtet ist, mit der internen Bremssteuerung/- regelung (S1), über eine Funkverbindung zu kommunizieren.

4. Bremssteuerung/-regelung (S1, S2) gemäß einem der vorhergehenden Ansprüche, wobei die externe Bremssteuerung/-regelung (S2) dazu eingerichtet ist, mit den Sensoren (30) über einen lokalen Daten-BUS zu kommunizieren.

5. Bremssteuerung/-regelung (S1, S2) gemäß einem der vorhergehenden Ansprüche, wobei die externe Bremssteuerung/-regelung (S2) als IPx-geschützte und/oder gegen äußere Einflüsse des Schienenverkehrs resistente Komponente ausgebildet ist.

6. Bremssteuerung/-regelung (S1, S2) gemäß einem der vorhergehenden Ansprüche, wobei die externe Bremssteuerung/-regelung (S2) mindestens einen Rechnerkern zum Betreiben von I/Os sowie zur (Vor-)Verarbeitung der Daten aufweist.

7. Bremssteuerung/-regelung (S1, S2) gemäß einem der vorhergehenden Ansprüche, wobei eine geräteinterne oder eine geräteexterne Energieversorgung zur Versorgung der externen Bremssteuerung/-regelung (S2) vorgesehen ist.

8. Bremssteuerung/-regelung (S1, S2) gemäß einem der vorhergehenden Ansprüche, wobei die externe Bremssteuerung/-regelung (S2) durch die interne Bremssteuerung/- regelung (S1) mit Energie versorgt wird.

9. Bremssteuerung/-regelung (S1, S2) gemäß einem der vorhergehenden Ansprüche, wobei von der externen Bremssteuerung/-regelung (S2) eine Verbindung zu wenigstens einer Informationssenke vorgesehen ist, um diese zu schalten und/oder zu aktivieren und/oder zu deaktivieren.

10. Bremssteuerung/-regelung (S1, S2) gemäß einem der vorhergehenden Ansprüche, wobei die externe Bremssteuerung/-regelung (S2) dazu eingerichtet ist, eine Datenverarbeitung parallel zu der internen Bremssteuerung/-regelung (S1) und/oder parallel zu einer Diagnoseeinheit auszuführen, um eine höhere Fehlersicherheit zu erreichen.

11. System aus einer Bremssteuerung/-regelung (S1, S2) gemäß einem der vorhergehenden Ansprüche 1 bis 10, wobei das System des Weiteren aufweist
- einen Wagenkasten (20),
- wenigstens ein Drehgestell (D),
- Sensoren (30),
- eine Datenverbindung (52) zwischen den Sensoren (30) und der externen Bremssteuerung/-regelung (S2), und
- eine Datenverbindung (51) zwischen der externen Bremssteuerung/-regelung (S2) und der internen Bremssteuerung/-regelung (S1).

12. System gemäß des vorhergehenden Anspruchs, wobei
die Datenverbindung (51) zwischen der externen Bremssteuerung/-regelung (S2) und der internen Bremssteuerung/-regelung (S1) über ein Netzwerk, insbesondere über einen Bus-Anschluss oder einen "wireless"-Busanschluss vorgesehen ist.

13. System gemäß einem der vorhergehenden Ansprüche 11 oder 12, wobei
wenigsten zwei Wagenkästen (20) vorgesehen sind, wobei
die internen Bremssteuerungen/-regelungen (S1, S') der Wagenkästen (20) durch einen zugweiten BUS (53) miteinander verbunden sind, der wenigstens einen Teilbereich eines Zuges miteinander verbindet.

14. System gemäß dem vorhergehenden Anspruch, wobei
die Verbindung (51) zwischen interner Bremssteuerung/-regelung (S1, S') und externer Bremssteuerung/-regelung (S2) von dem zugweiten BUS (53) unabhängig ist, um eine verringerte Datenlast auf dem zugweiten BUS (53) zu erreichen.

## Claims

1. Brake controller/regulator (S1, S2) for a rail vehicle having a railcar body (20) to which at least one bogie (D) is attached in a manner able to move by at least one degree of freedom,
**characterized in that**
the brake controller/regulator (S1, S2) is of multipart design, divided into at least one internal brake controller/regulator (S1) that is able to be arranged inside or on the railcar body (20) and into at least one external brake controller/regulator (S2) that is able to be arranged inside or on the bogie (D), wherein
the external brake controller/regulator (S2) is designed to communicate with sensors (30) that are arranged on the bogie (D), and to collect and/or to (pre) process data ascertained from the sensors (30) in order to forward said data to the internal brake controller/regulator (S1), such that the amount of data to be exchanged is reduced due to the processing of the data by the external brake controller/regulator (S2).

2. Brake controller/regulator (S1, S2) according to the preceding claim, wherein the external brake controller/regulator (S2) is designed to communicate with the internal brake controller/regulator (S1) via a system of cables (51).

3. Brake controller/regulator (S1, S2) according to Claim 1, wherein the external brake controller/regulator (S2) is designed to communicate with the internal brake controller/regulator (S1) via a radio connection.

4. Brake controller/regulator (S1, S2) according to one of the preceding claims, wherein the external brake controller/regulator (S2) is designed to communicate with the sensors (30) via a local data bus.

5. Brake controller/regulator (S1, S2) according to one of the preceding claims, wherein the external brake controller/regulator (S2) is designed as an IPx-protected component and/or a component resistant to external rail traffic influences.

6. Brake controller/regulator (S1, S2) according to one of the preceding claims, wherein the external brake controller/regulator (S2) has at least one computer core for operating I/Os and for (pre)processing the data.

7. Brake controller/regulator (S1, S2) according to one of the preceding claims, wherein provision is made for a device-internal or a device-external power supply for supplying the external brake controller/regulator (S2).

8. Brake controller/regulator (S1, S2) according to one of the preceding claims, wherein the external brake controller/regulator (S2) is supplied with power by the internal brake controller/regulator (S1).

9. Brake controller/regulator (S1, S2) according to one of the preceding claims, wherein provision is made for a connection from the external brake controller/regulator (S2) to at least one information sink, in order to connect and/or to activate and/or to deactivate same.

10. Brake controller/regulator (S1, S2) according to one of the preceding claims, wherein the external brake controller/regulator (S2) is designed to implement data processing in parallel with the internal brake controller/regulator (S1) and/or in parallel with a diagnostic unit in order to achieve greater fail-safety.

11. System consisting of a brake controller/regulator (S1, S2) according to one of preceding Claims 1 to 10, wherein the system furthermore has
- a railcar body (20),
- at least one bogie (D),
- sensors (30),
- a data connection (52) between the sensors (30) and the external brake controller/regulator (S2), and
- a data connection (51) between the external brake controller/regulator (S2) and the internal brake controller/regulator (S1).

12. System according to the preceding claim, wherein the data connection (51) is provided between the external brake controller/regulator (S2) and the internal brake controller/regulator (S1) via a network, in particular via a bus connection or a wireless bus connection.

13. System according to either of preceding Claims 11 and 12, wherein
at least two railcar bodies (20) are provided, wherein the internal brake controllers/regulators (S1, S') of the railcar bodies (20) are connected to one another by a cross-train bus (53) that connects at least one subregion of a train to one another.

14. System according to the preceding claim, wherein the connection (51) between the internal brake controller/regulator (S1, S') and external brake controller/regulator (S2) is independent of the cross-train bus (53), in order to achieve a reduced data load on the cross-train bus (53).

## Revendications

1. Commande/régulation (S1, S2) de frein d'un véhicule ferroviaire, qui a une caisse (20) à laquelle au moins un boggie (D) est fixé de manière mobile en ayant au moins un degré de liberté
**caractérisée en ce que**
la commande/régulation (S1, S2) de frein est réalisée en plusieurs parties, en étant répartie en au moins une commande/régulation (S1, S2) intérieure de frein, qui peut être disposée à l'intérieur ou sur la caisse (20), ainsi qu'en au moins une commande/régulation (S2) extérieure, qui peut être disposée dans ou sur le boggie (D), dans laquelle
la commande/régulation (S2) extérieure de frein est conçue pour communiquer avec des capteurs (30), qui sont disposés sur le boggie (D), et pour collecter et/ou (pré)traiter des données déterminées par les capteurs (30) afin d'acheminer celles-ci à la commande/régulation (S1) intérieure de frein, de manière à réduire la quantité de données échangées en raison du traitement des données par la commande/régulation extérieure de frein.

2. Commande/régulation (S1, S2) de frein suivant la revendication précédente, dans laquelle la commande/régulation (S2) extérieure de frein est conçue pour communiquer avec la commande/régulation (S1) intérieure de frein par un câblage (51).

3. Commande/régulation (S1, S2) de frein suivant la revendication 1, dans laquelle la commande/régulation (S2) extérieure de frein est conçue pour communiquer avec la commande/régulation (S1) intérieure de frein par une liaison radio.

4. Commande/régulation (S1, S2) de frein suivant l'une des revendications précédentes, dans laquelle la commande/régulation (S2) extérieure de frein est conçue pour communiquer avec les capteurs (30) par un bus de données local.

5. Commande/régulation (S1, S2) de frein suivant l'une des revendications précédentes, dans laquelle la commande/régulation (S2) extérieure de frein est constituée sous la forme d'un composant à protection IPx et/ou résistant aux influences extérieures du trafic ferroviaire.

6. Commande/régulation (S1, S2) de frein suivant l'une des revendications précédentes, dans laquelle la commande/régulation (S2) extérieure de frein a au moins un noyau d'ordinateur pour le fonctionnement d'entrée/sortie ainsi que pour le (pré-)traitement des données.

7. Commande/régulation (S1, S2) de frein suivant l'une des revendications précédentes, dans laquelle il est prévu une alimentation en énergie intérieure à l'appareil ou extérieure à l'appareil pour l'alimentation de la commande/régulation (S2) extérieure de frein.

8. Commande/régulation (S1, S2) de frein suivant l'une des revendications précédentes, dans laquelle la commande/régulation (S2) extérieure de frein est alimentée en énergie par la commande/régulation intérieure de frein.

9. Commande/régulation (S1, S2) de frein suivant l'une des revendications précédentes, dans laquelle il est prévu par la commande/régulation (S2) extérieure de frein une liaison avec au moins un puits d'information afin de brancher celui-ci et/ou de l'activer et/ou de le désactiver.

10. Commande/régulation (S1, S2) de frein suivant l'une des revendications précédentes, dans laquelle la commande/régulation (S2) extérieure de frein est conçue pour effectuer un traitement de données en parallèle à la commande/régulation (S1) intérieure de frein et/ou en parallèle à une unité de diagnostic, afin d'atteindre une plus grande sécurité à l'erreur.

11. Système composé d'une commande/régulation (S1, S2) de frein suivant l'une des revendications 1 à 10 précédentes, le système ayant en outre
- une caisse (20),
- au moins un boggie (D),
- des capteurs (30),
- une liaison (52) de données entre les capteurs (30) et la commande/régulation (S2) extérieure de frein et
- une liaison (51) de données entre la commande/régulation (S2) extérieure de frein et la commande/régulation intérieure de frein.

12. Système suivant la revendication précédente, dans lequel
la liaison (51) de données entre la commande/régulation (S2) extérieure de frein et la commande/régulation (S1) intérieure de frein est prévue par un réseau, notamment par une connexion de bus ou une connexion de bus « sans fil ».

13. Système suivant l'une des revendications 11 ou 12 précédentes dans lequel
il est prévu au moins deux caisses (20), dans lequel
les commandes/régulations (S1, S') intérieures de frein des caisses (20) sont reliées entre elles par un bus (53) de train, qui relie entre elles au moins une partie partielle d'un train.

14. Système suivant la revendication précédente dans lequel
la liaison (51) entre la commande/régulation (S1, S') intérieure de frein et la commande/régulation (S2) extérieure de frein est indépendante du bus (53) de train pour obtenir une charge de données diminuée sur le bus (53) de train.
